**Europäisches Patentamt**

**European Patent Office**

**Office européen des brevets**

(19)

(11) Numéro de publication: **0 263 739**
**B1**

(12)

# FASCICULE DE BREVET EUROPEEN

(45) Date de publication du fascicule du brevet: **06.02.91**

(51) Int. Cl.⁵: **G 02 B 6/32, G 02 B 6/38**

(21) Numéro de dépôt: **87402122.3**

(22) Date de dépôt: **23.09.87**

(54) **Dispositif de connexion pour fibres optiques.**

(30) Priorité: **24.09.86 FR 8613353**

(43) Date de publication de la demande:
**13.04.88 Bulletin 88/15**

(45) Mention de la délivrance du brevet:
**06.02.91 Bulletin 91/06**

(84) Etats contractants désignés:
**DE GB IT**

(56) Documents cités:
EP-A-0 022 374
US-A-4 087 155
US-A-4 140 365

PATENT ABSTRACTS OF JAPAN, vol. 5, no. 110
(P-71)782r, 17 juillet 1981; & JP-A-56 52 715

PATENT ABSTRACTS OF JAPAN, vol. 1, no. 72,
13 juillet 1977, page 779 E 77; & JP-A-52 9450

(73) Titulaire: **COMPAGNIE DEUTSCH (Société
Anonyme)**
10, rue Lionel-Terray
F-92502 Rueil-Malmaison (FR)

(72) Inventeur: **Maillard, Jean-Jacques**
4, Parc des Fontaines
F-27600 Fontaine Bellenger (FR)
Inventeur: **Dubocs, Gérard**
Rue du Val au Loup
F-27370 Saint Pierre de Boscguerard (FR)

(74) Mandataire: **Laget, Jean-Loup et al**
Cabinet Pierre Loyer 77, rue Boissière
F-75116 Paris (FR)

(56) References cited:
**TRANSACTIONS OF THE I.E.C.E. OF JAPAN, vol.
E66, no. 3, mars 1983, pages 179-185, Tokyo, JP;
H. MURATA: "Characterization of insert molded
single optical-fiber connectors using ceramic
balls"**

**APPLIED OPTICS, vol. 20, no. 16, 15 aou7t 1981,
pages 2861-2867, Optical Society of America,
New York, US; J.C. BAKER et al.: "Expandedbeam connector design study"**

Courier Press, Leamington Spa, England.

EP 0 263 739 B1

## Description

L'invention concerne un dispositif de connexion pour fibres optiques, et notamment pour fibres optiques individuelles.

Pour assurer la connexion de deux fibres optiques, on a proposé des dispositifs qui s'apparentent aux connecteurs électriques, c'est-à-dire des dispositifs constitués de deux embouts solidarisables. Il en résulte que ces embouts ne sont pas identiques et doivent être montés sur les fibres optiques dans un ordre déterminé.

L'un des buts de la présente invention est de proposer un dispositif de connexion grâce auquel les fibres optiques sont toutes équipés d'embouts du même type, ce qui facilite à la fois la fabrication et le montage automatique des embouts.

Un autre but de l'invention est de faciliter l'arrimage du câble optique avec auto-centrage de la fibre, c'est-à-dire en évitant tout déplacement radial de l'extrémité de la fibre par rapport à son axe longitudinal au voisinage de la connexion.

Enfin, un troisième but de l'invention est de protéger mécaniquement l'extrémité de la fibre.

Une solution à ce problème est décrite au US—A—4 087 155. Cependant ce dispositif ne protège pas l'extrémité de la fibre qui est destinée à à venir en contact contre l'extrémité de la fibre opposée. D'autre part, si la fibre est arrimée avec auto-centrage, le dispositif d'arrimage est complexe du fait du nombre important de pièce à assembler (support central 22, pièces de raccordement 20, 26, boîtier 16, 18, 24 ressort).

L'invention propose un dispositif de ce type plus simple, permettant une mise en place des fibres rapide.

La présente invention a pour objet un dispositif de connexion pour deux fibres optiques comportant un boîtier de raccordement muni d'une cavité de centrage tubulaire et de deux embouts de connexion identiques, un pour chacune des fibres à mettre en connexion, du type dans lequel chaque embout comporte deux pièces: un embout de fibre et un élément de raccordement avec le boîtier, ledit élément de raccordement étant de forme générale cylindrique avec une rainure extérieure annulaire, et à l'avant un chanfrein pour s'engager dans la cavité de centrage du boîtier, caractérisé en ce que:

le boitier est symétrique par rapport à un plan transversal médian,

les embouts sont encliquetables, ladite rainure extérieure annulaire étant en forme de V afin de recevoir les cliquets du boîtier de raccordement et de pouvoir s'en dégager facilement,

l'élément de raccordement présente une partie avant de diamètre réduit comportant intérieurement un sous-ensemble de centrage et de collimation,

le sous-ensemble de centrage et de collimation se trouve dans une chambre tubulaire cylindrique, qui est coaxiale avec l'embout de fibre et est munie à l'avant d'une paroi d'extrémité comportant une ouverture circulaire, coaxiale, afin que les ouvertures de chaque extrémité d'embout soient dans l'axe du faisceau optique, et à l'intérieur de ladite chambre sont disposés des moyens de centrage mécaniques de la fibre optique, des moyens de collimation optiques et un liquide visqueux adaptateur d'indice.

L'invention est encore remarquable par les caractéristiques suivantes:

l'embout de fibre est de forme générale cylindrique, avec une extrémité avant perpendiculaire à l'axe du dispositif, munie d'un chanfrein, et l'arrière de l'embout comporte un épaulement annulaire suivi vers l'arrière d'une extrémité de diamètre réduit pour assurer le sertissage de la fibre optique,

la fibre optique est dénudée et traverse l'extrémité de l'embout de fibre et fait saillie sur une longueur déterminée,

l'élément de raccordement comporte intérieurement une autre chambre cylindrique reliée à l'avant à la chambre du sous-ensemble de centrage, et ouverte à l'arrière pour recevoir l'embout de fibre,

ladite autre chambre est traversée longitudinalement par l'embout de fibre et par la fibre dénudée, et elle est munie de moyens d'accrochage de l'embout de fibre,

ladite autre chambre comporte à l'avant une paroi d'extrémité perpendiculaire à l'axe longitudinal sur laquelle l'embout de fibre vient en butée, et ladite autre chambre se prolonge vers l'avant par une partie cônique et un passage axial débouchant dans la chambre du sous-ensemble de centrage,

l'autre chamber comporte une ouverture arrière élastiquement déformable et munie d'un cliquet annulaire suceptible de coopérer avec l'épaulement annulaire de l'embout de fibre pour immobiliser l'embout après encliquetage,

les moyens de centrage sont constitués par un jeu de six billes arrangées en deux couches adjacentes de trois billes, les couches étant mutuellement décalées de 60° pour réaliser un auto-centrage de la fibre,

les moyens de collimation sont constitués par une lentille convergente qui est en appui, d'un côté sur trois billes de la couche d'extrémité, et de l'autre sur l'ouverture circulaire de la chambre de sorte que la lentille est auto-centrée sur l'ouverture,

la lentille est sphérique,

le boîtier de raccordement comporte une embase susceptible d'être fixée sur un rail recevant plusieurs boîtiers.

D'autres caractéristiques de l'invention ressortent de la description qui suit, faite avec référence au dessin annexé sur lequel on peut voir:

Figure 1 une vue schématique en coupe longitudinale d'un dispositif de connexion pour fibres optiques selon l'invention,

Figure 2 une vue en coupe longitudinale d'un embout de cable muni de son élément de raccordement faisant partie du dispositif de connexion de la figure 1,

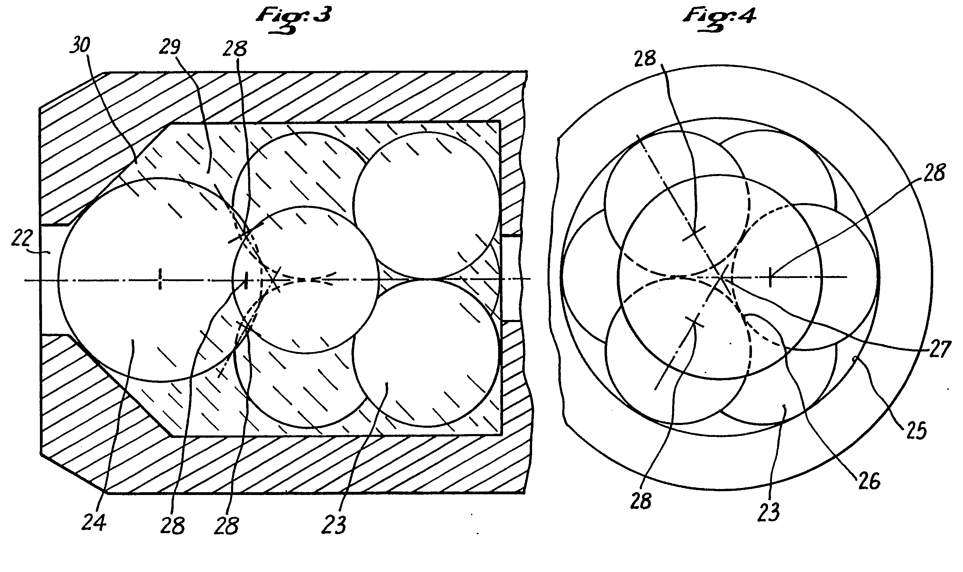

Figure 3 une vue en coupe longitudinale du sous-ensemble de centrage du dispositif de connexion de la figure 1,

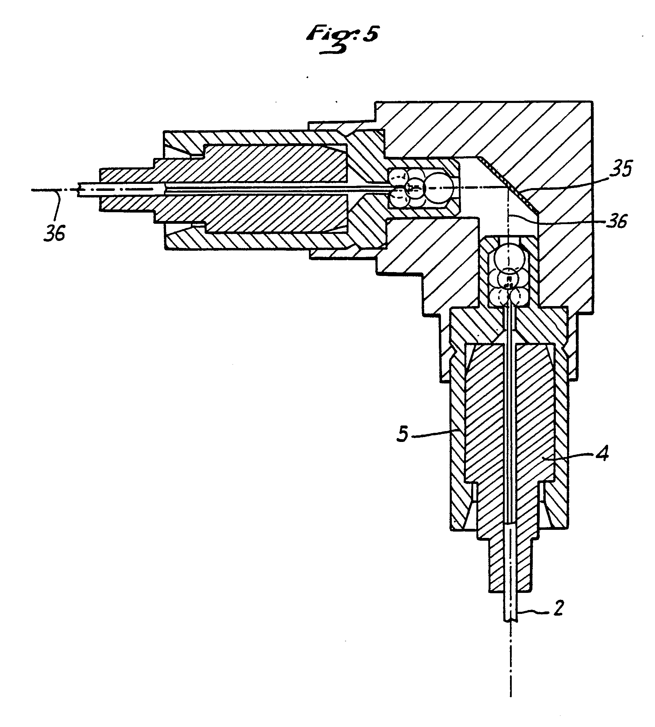

Figure 4 une vue simplifiée de coté du sous-ensemble de centrage de la figure 3,

Figure 5 une vue schématique en coupe longitudinale d'une variante de réalisation du dispositif de la figure 1.

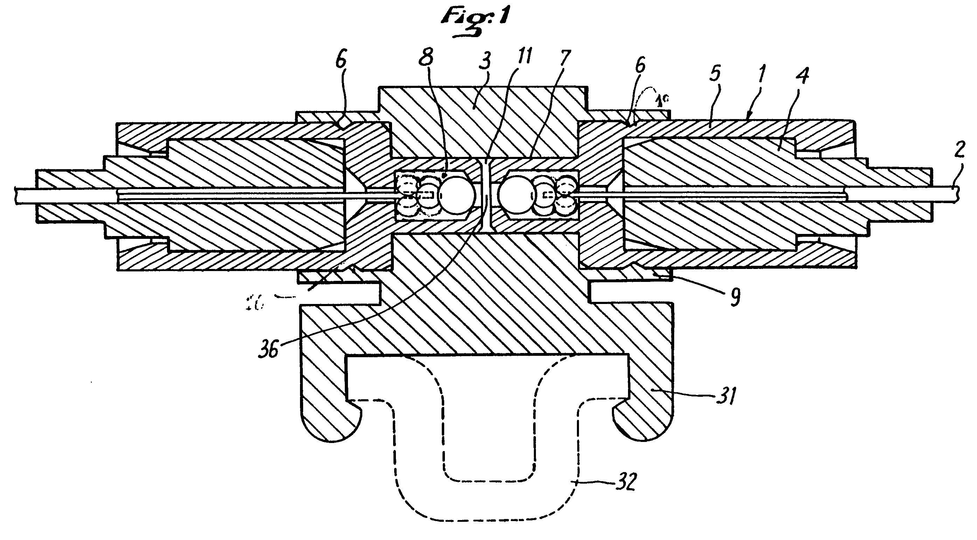

En se reportant à la figure 1, on voit que le dispositif de connexion selon l'invention se compose essentiellement de trois pièces: d'un embout 1 pour chacune des deux fibres 2 à raccorder, et d'un boîtier de raccordement 3, symétrique, et recevant les deux embouts 1.

Chaque embout 1 comporte deux pièces:
un embout 4 de fibre optique,
un élément 5 de raccordement comportant les moyens de centrage et de collimation.

Le boîtier 3 est symétrique par rapport à son plan transversal médian; il comprend, de part et d'autre de ce plan, une partie cylindrique 9, recevant l'élément de raccordement 5. La paroi intérieure de cette partie cylindrique 9 comporte une nervure annulaire 10 qui pénètre dans une rainure 6 de l'élément 5 pour réaliser un encliquetage de verrouillage de l'embout 1.

Dans le mode de réalisation représenté, la nervure présente deux bords d'attaque inclinées en forme de V ouvert, afin de faciliter la déformation élastique de la matière formant le cliquet, lors du verrouillage et du déverrouillage.

Les parties cylindriques 9 se prolongent et communiquent entre elles interieurement par un passage 11 cylindrique, de centrage, d'axe 36 de plus petit diamètre, qui traverse le boîtier. Ce passage 11, ou cavité cylindrique est destinée à recevoir les sous-ensembles 8 de centrage et collimation.

Chaque embout 4 de fibre est de forme générale cylindrique, de longueur L, avec une extrémité avant 34 perpendiculaire à l'axe, chanfreinée en 18 pour favoriser l'engagement de l'embout 4 dans l'élément de raccordement 5, et à l'arrière un épaulement 20 suivi, d'une extrémité 19 cylindrique de diamètre réduit pour permettre un sertissage de type connu, par exemple sur le revêtement du cable. L'embout 4 est traversé longitudinalement par une fibre otique 2 dont l'extrémité a été dénudée et quie fait saillie au delà de l'extrémité de l'embout 4 d'une longueur prédéterminée.

Chaque élément de raccordement 5 est de forme générale cylindrique, avec une rainure annulaire 6, et une extrémite avant 7 cylindrique, de diamètre réduit. Le diamètre de l'extrémité 7 est légèrement inférieur à celui du passage 11 de centrage afin que l'extrémité 7 pénètre dans le passage. En outre l'arête de cette extrémité comporte un chanfrein 33 afin de la guider et la centrer dans le passage 11.

L'élément de raccordement 5 comporte intérieurement une chambre 12, cylindrique, reliée à l'avant au sous-ensemble de centrage 8, et ouverte à l'arrière pour recevoir l'embout de fibre 4.

La chambre 12 comporte, à l'avant, une paroi d'extrémité qui présente à sa périphérie une partie 16 perpendiculaire à l'axe 36 longitudinal, formant butée pour l'extrémité avant de l'embout de fibre 4, et en son centre une partie 14 cônique se prolongeant par un passage 15 axial débouchant dans le sous-ensemble de centrage 8.

La longueur de la chambre 12 est sensiblement égale à la longueur L du cylindre de l'embout de fibre 4 de telle sorte que l'embout 4 remplit complètement la partie cylindrique de la chambre 12.

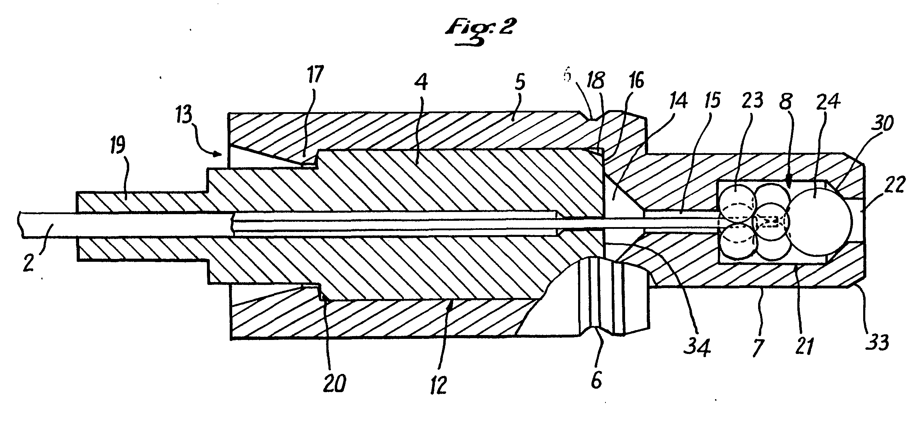

A l'arrière, la chambre présente une ouverture 13 cônique vers l'extérieur, de section longitudinale en forme de cliquet 17 (figure 2). Le diamètre de cette ouverture 13 est inférieur au diamètre de la chambre 12 et de l'embout 4, et la déformation élastique de l'ouverture permet le passage; le verrouillage de l'embout dans la chambre est assuré par la coopération du cliquet 17 sur l'épaulement 20 formé par le rétrécissement du diamètre de la partie arrière de l'embout 4.

Dans le mode de réalisation illustré, le cliquet 17 est annulaire, en ce sens que ce ne sont pas des extensions en forme de bras qui verrouillent et déverouillent par une simple et facile déformation élastique, mais ici, c'est l'anneau constitué par l'extrémité symétrique de l'ouverture 13 qui doit se déformer. Cette déformation nécessite des efforts importants d'étirement de la matière, ce qui assure un verrouillage pratiquement indémontable une fois que l'embout 4 est mis en place.

Chaque élément de raccordement 5 comporte, à l'avant, dans la partie 7 cylindrique de diamètre réduit, un sous-ensemble 8 de centrage et de collimation.

Le sous-ensemble de centrage et de collimation est constitué par une chambre 21 tubulaire cylindrique coaxiale à la chambre 12. Cette chambre cylindrique se prolonge vers l'avant par une partie conique 30, munie d'une couverture axiale circulaire de passage du faisceau optique. A l'arrière une ouverture relie la chambre 21 à la chambre 12 par le passage 15.

Le dispositif de centrage utilise un jeu de six billes de centrage, identiques 23, disposées à l'intérieur de l'alesage 25 du tube 21. Les billes sont réparties en deux couches adjacentes de trois billes chacune. Dans chaque couche, chaque bille a un point de contact 26 avec les deux autres. Au centre, il y a un espace intersticiel 27 pour le passage de la fibre 2 dans l'axe 36.

Les deux couches de billes sont décalées de 60° ce qui fait que lesdites couches sont fixes et autocentrées.

Le dispositif de collimation utilise une lentille convergente 24, disposée, à l'intérieur de l'alesage 25, d'un coté sur la couche de billes extérieure contre l'ouverture centrale 22, de l'autre coté sur la partie conique 30. En raison de la symétrie de révolution de la chambre 21, la lentille 24 est auto-centrée sur l'axe 36 du dispositif et repose par trois points de contact 28 sur les billes.

De préférence la lentille est sphérique.

Tout l'espace intérieur de la chambre 21, en dehors des billes et de la lentille 24 est rempli de liquide 29, adaptateur d'indice.

La zone de l'élément de raccordement 5 entre la chambre 12 et la chambre 21 présente une partie cônique 14 et un passage axiale 15: ceux-ci assurent un préguidage de la fibre lors de son introduction dans le sous-ensemble de centrage 8, et une retenue du liquide adaptateur d'indice 29, en cas de dilatation thermique, notamment.

La longueur dénudée de la fibre 2 est déterminée de façon que l'extrémité soit située dans le plan focal de la lentille afin d'obtenir un faisceau émergent parallèle. La lentille est ainsi une lentille de collimation.

Sur la figure 1 le boitier 3 est représenté comportant une embase 31 susceptible d'être fixée sur un rail 32, ou tout autre dispositif de ce genre, permettant de placer plusieurs boitiers. Lorsqu'on assure la connexion d'une nappe de fibres on dispose côte à côte, une série de boîtier de raccordement 3 et on vient y placer les embouts.

La réalisation d'une connexion est la suivante:

a—on insère l'extrémité dénudée d'une fibre dans un embout de fibre 4 et on effectue eun sertissage, en laissant l'extrémité dénudée dépasser de l'embout. L'extrémité dénudée est coupée, par tout moyen connu, à une longueur prédéterminée.

b—l'embout 4, muni de sa fibre, est introduit dans l'élément de raccordement. L'extrémité de la fibre est guidée dans le cône 14, dans le passage 15, puis est centrée dans l'espace inters-triel 27.

Lors de l'introduction de l'embout 4, l'ouverture 13, 17 s'élargit. Lorsque l'embout vient en butée sur la paroi 16 d'extrémité de la chambre 12 le cliquet 17 de l'ouverture se referme et verrouille l'embout 4 dans la chambre, et la fibre est en place, sur l'axe 36 du dispositif dans le plan focal de la lentille 24.

c—l'embout de connexion 1 ainsi formé est introduit dans le boitier 3. L'extrémité 7 de l'élément de raccordement pénètre dans le passage 11. L'embout de connexion est en place lorsque la nervure 10 est logée dans la rainure 6.

d—on prépare de la même manière un deuxième embout de connexion 1 et on le met en place dans le boîtier 3 symétriquement au premier.

Lorsque les deux embouts 1 sont en place, les extrémités des sous-ensembles de centrage et raccordement sont alignés coaxialement et immobilisés à une faible distance l'une de l'autre.

Dans une variante de réalisation du dispositif selon l'invention (figure 5), le boitier symétrique peut comporter un miroir 35 reflechissant dans la cavité tubulaire de pasage. Le miroir dévie l'axe 36 du faisceau symétriquement par rapport au plan perpendiculaire au plan du miroir; l'axe de symétrie du boitier étant précisement ce plan perpendiculaire au miroir.

Dans cette variante les embouts de connexion 1 sont alignés dans l'axe optique 36 ils sont "optiquement en face l'un de l'autre" par l'intermédiaire d'une surface reflechissante 35.

Ce dispositif de connexion pour fibres optiques procure de nombreux avantages:

le faisceau émergeant d'un embout 1 de connexion est un faisceau parallèle élargi, et il peut être capté et transmis intégralement, sans difficulté de montage,

l'extrémité de la fibre est protégée mécaniquement par la lentille, sans nécessité une protection particulière,

l'extrémité de la fibre n'est pas au contact de la lentille ou d'un autre objet solide qui pourrait détruire l'aspect de l'extrémité,

la lentille joue le rôle de bouchon vis à vis du liquide,

le raccordement des embouts de connexion n'exige pas une grande précision: les embouts peuvent être proches ou éloignés l'un de l'autre, seul leur alignement dans l'axe optique est important.

D'autre part cet embout de connexion peut être raccordé à d'autres dispositifs munis de composants actifs ou passifs, notamment des coupleurs, dérivateurs, multiplexeurs, démulti-plexeurs, etc., munis d'une cavité à enclipsage.

**Revendications**

1. Dispositif de connexion pour deux fibres optiques comportant un boîtier de raccordement muni d'une cavité de centrage tubulaire et de deux embouts de connexion identiques, un pour chacune des fibres à mettre en connexion, du type dans lequel chaque embout comporte deux pièces: un embout de fibre et un élément de raccordement avec le boîtier, ledit élément de raccordement étant de forme générale cylindrique avec une rainure extérieure annulaire, et à l'avant un chanfrein pour s'engager dans la cavité de centrage du boitier, caractérisé en ce que:

le boîtier est symétrique par rapport à un plan transversal médian,

les embouts sont encliquetables, ladite rainure extérieure annulaire (6) étant en forme de V afin de recevoir les cliquets du boîtier de raccordement et de pouvoir s'en dégager facilement,

l'élément de raccordement présente une partie avant (7) de diamètre réduit comportant intérieurement un sous-ensemble (8) de centrage et de collimation,

le sous-ensemble (8) de centrage et de collimation se trouve dans une chambre (21) tubulaire cylindrique, qui est coaxiale avec l'embout de fibre et est munie à l'avant d'une paroi d'extrémité (40) comportant une ouverture (22) circulaire, coaxiale, afin que les ouvertures de chaque extrémité d'embout soient dans l'axe du faisceau optique, et à l'intérieur de ladite chambre (21) sont disposés des moyens (23) de centrage mécaniques de la fibre optique (2), des moyens de collimation optiques (24) et un liquide (29) visqueux adaptateur d'indice.

2. Dispositif selon la revendication 1 caractérisé en ce que l'embout de fibre (4) est de forme générale cylindrique, avec une extrémité avant (34) perpendiculaire à l'axe du dispositif, munie d'un chanfrein (18), et l'arrière de l'embout comporte un épaulement (20) annulaire suivi vers l'arrière d'une extrémité (19) de diamètre réduit pour assurer le sertissage de la fibre optique (2).

3. Dispositif selon la revendication 2 caractérisé en ce que la fibre optique (2) est dénudée et traverse l'extrémité (34) de l'embout de fibre et fait saillie sur une longueur déterminée.

4. Dispositif selon la revendication 1 caractérisé en ce que l'élément de raccordement (5) comporte intérieurement une autre chambre (12) cylindrique reliée à l'avant à la chambre du sous-ensemble de centrage (8), et ouverte (13) à l'arrière pour recevoir l'embout de fibre (4).

5. Dispositif selon la revendication 4 caractérisé en ce que ladite autre chambre (12) est traversée longitudinalement par l'embout de fibre (4) et par la fibre dénudée (2), et elle est munie de moyens (17) d'accrochage de l'embout de fibre (4).

6. Dispositif selon la revendication 4 caractérisé en ce que ladite autre chambre (12) comporte à l'avant une paroi d'extrémité (16) perpendiculaire à l'axe longitudinal sur laquelle l'embout de fibre (4) vient en butée, et ladite autre chambre se prolonge vers l'avant par une partie cônique (14) et un passage axial (15) débouchant dans la chambre du sous-ensemble de centrage (8).

7. Dispositif selon les revendications 3 et 4 caractérisé en ce que l'autre chambre (12) comporte une ouverture (13) arrière élastiquement déformable et munie d'un cliquet (17) annulaire susceptible de coopérer avec l'épaulement (20) annulaire de l'embout de fibre (4) pour immobiliser l'embout après encliquetage.

8. Dispositif selon la revendication 1 caractérisé en ce que les moyens (23) de centrage sont constitués par un jeu de six billes arrangées en deux couches adjacentes de trois billes, les couches étant mutuellement décalées de 60° pour réaliser un auto-centrage de la fibre (2).

9. Dispositif selon la revendication 8 caractérisé en ce que les moyens (24) de collimation sont constitués par une lentille convergente qui est en appui, d'un coté sur trois billes (23) de la couche d'extrémité, et de l'autre sur l'ouverture (22) circulaire de la chambre (21) de sorte que la lentille (24) est auto-centrée sur l'ouverture (22).

10. Dispositif selon la revendication 9 caractérisé en ce que la lentille (24) est sphérique.

11. Dispositif selon l'une quelconque des revendications précédentes caractérisé en ce que le boîtier de raccordement (3) comporte une embase (31) susceptible d'être fixée sur un rail (32) recevant plusieurs boîtiers.

**Patentansprüche**

1. Verbindungsvorrichtung für zwei optische Fasern, die ein Verbindungsgehäuse umfaßt, welches mit einer röhrenförmigen Zentrierungsausnehmung und mit zwei identischen Verbindungsanschlußstücken versehen ist, von denen jedes für eine der Fasern vorgesehen ist, die in Verbindung gebracht werden sollen, wobei die Anschlußstücke so gestaltet sind, daß jedes aus zwei Teilen besteht: einem Endanschlußstück für die Faser und einem Verbindungselement mit dem Gehäuse, welches eine im wesentlichen zylindrische Form mit einer ringförmigen äußeren Nut aufweist, es weist vorne eine Abschrägung auf, mit der es in der Zentrierungsausnehmung einrastbar ist, dadurch gekennzeichnet, daß:

das Gehäuse symmetrisch im Verhältnis zu einer in der Mitte liegenden Querschnittsebene ist,

die Endanschlußstücke einklinkbar sind, wobei die ringförmige äußere Nut (6) die Form eines V aufweist, um die Klinken des Verbindungsgehäuses aufzunehmen und davon leicht trennbar zu sein,

das Verbindungselement ein Vorderteil (7) mit verringertem Durchmesser aufweist, welches innen eine Unteranordnung (8) für die Zentrierung und die Lichtbündelung aufweist,

sich die Unteranordnung (8) für die Zentrierung und die Lichtbündelung in einer röhrenförmigen zylindrischen Kammer (21) befindet, die mit dem Anschlußstück der Faser koaxial ist und die vorne mit einer Außenwand (40) versehen ist, die eine kreisförmige koaxiale Öffnung (22) aufweist, damit die Öffnungen von jedem Ende eines Endanschlußstücks in der Achse des Lichtbündels befindlich sind und innerhalb der Kammer (21) Vorrichtungen (23) zur mechanischen Zentrierung der optischen Faser (2), Vorrichtungen zur optischen Lichtbündelung (24) und eine viskose Flüssigkeit (29) zur Anpassung des Brechungsindexes angeordnet sind.

2. Vorrichtung nach Anspruch 1, dadurch gekennzeichnet, daß das Endanschlußstück der Faser (4) eine im wesentlichen zylindrische Form mit einem vorderen Ende (34) aufweist, das senkrecht zu der Achse der Vorrichtung ist, und mit einer Abschrägung (18) versehen ist, wobei die Rückseite des Endanschlußstücks einen ringförmigen Vorsprung (20) aufweist, der sich nach hinten in einer Verlängerung (19) mit geringerem Durchmesser fortsetzt, um dadurch die Einfassung der optischen Faser (2) zu sichern.

3. Vorrichtung nach Anspruch 2, dadurch gekennzeichnet, daß die optische Faser (2) entmantelt ist und durch das Ende (34) des Anschlußstücks der Faser hindurchtritt und eine bestimmte Länge über dieses herausragt.

4. Vorrichtung nach Anspruch 1, dadurch gekennzeichnet, daß das Anschlußelement (5) innen eine andere zylindrische Kammer (12) umfaßt, die vorne mit der Kammer der Unteranordnung für die Zentrierung (8) verbunden ist und die nach hinten offen (13) ist, um das Anschlußelement der Faser (4) aufzunehmen.

5. Vorrichtung nach Anspruch 4, dadurch gekennzeichnet, daß das Anschlußelement der Faser (4) und die entmantelte Faser (2) längs durch die andere Kammer (12) durchgeführt sind, wobei diese mit Vorrichtungen (17) zur Befestigung des Anschlußelements der Faser (4) versehen ist.

6. Vorrichtung nach Anspruch 4, dadurch gekennzeichnet, daß die andere Kammer (12) vorne eine Endwand (16) umfaßt, die senkrecht steht auf der Längsachse, auf der das Anschlußelement der Faser (4) in Anlage kommt, und wobei sich diese andere Kammer durch einen konischen Abschnitt (14) und einen axialen Durchtritt (15), der in der Kammer Unteranordnung für die Zentrierung (8) mündet, nach vorne erstreckt.

7. Vorrichtung nach den Ansprüchen 3 und 4, dadurch gekennzeichnet, daß die andere Kammer (12) eine hintere Öffnung (13) aufweist, die elastisch verformbar ist und mit einer ringförmigen Klinke (17) ausgestattet ist, welche mit dem ringförmigen Vorsprung (20) des Anschlußelements (4) der Faser zusammenwirken kann, um das Anschlußelement nach dem Einklinken zu fixieren.

8. Vorrichtung nach Anspruch 1, dadurch gekennzeichnet, daß die Vorrichtungen (23) zur Zentrierung durch eine Gruppe von sechs Kugeln gebildet werden, die in zwei benachbarten Lagen von je drei Kugeln angeordnet sind, wobei die Lagen gegeneinander um 60° verschoben sind, um so eine Selbstzentrierung der Faser (2) zu bewirken.

9. Vorrichtung nach Anspruch 8, dadurch gekennzeichnet, daß die Vorrichtungen (24) zur Lichtbündelung aus einer Sammellinse bestehen, die auf der einen Seite auf drei Kugeln (23) der äußeren Lage aufliegt, und die auf der anderen Seite auf der kreisförmigen Öffnung (22) der Kammer (21) aufliegt, dergestalt, daß die Linse (24) von selbst über der Öffnung (22) zentriert ist.

10. Vorrichtung nach Anspruch 9, dadurch gekennzeichnet, daß die Linse (24) sphärisch ist.

11. Vorrichtung nach einem beliebigen der vorhergehenden Ansprüche, dadurch gekennzeichnet, daß das Verbindungsgehäuse (3) einen Sockel (31) umfaßt, der auf einer Schiene (32) befestigbar ist, die mehrere Gehäuse aufnimmt.

**Claims**

1. Connection device for two optical fibres comprising a linking case provided with a tubular centering cavity and two identical connecting end pieces one for each of the fibres to be connected of the type in which each end piece comprises two parts: a fibre end piece and a linking element with the case, the said linking element being generally cylindrically shaped with an annular exterior groove and disposed in front of a chamfer in order to engage in the centering cavity of the case, characterized in that:

the case is symmetrical with respect to a median transverse plane,

the end pieces can be snapped in position, the said annular exterior groove (6) being in the shape of a V so as to receive the catches of the linking case and to be able to disengage in a simple manner,

the linking element has a front part (7) with a reduced diameter comprising on the inside a centering and collimation sub-assembly (8),

the centering and collimation sub-assembly (8) is situated in a tubular cylindrical chamber (21) which is co-axial with the fibre end piece and is provided at the front with an end wall (40) which comprises a circular co-axial aperture (22) so that the apertures of each end piece end are on the axis of the optical bundle and there are disposed on the inside of the said chamber (21) mechanical centering means (23) for the optical fibre (2), optical collimation means (24) and a viscous index adapter liquid (29).

2. Device according to Claim 1, characterized in that the fibre end piece (4) is generally cylindrically shaped with a front end (34) which is perpendicular to the axis of the device, provided with a chamfer (18) and the rear of the end piece comprises an annular shoulder (20) followed at the rear by an end (19) with a reduced diameter in order to ensure that the optical fibre (2) is connected.

3. Device according to Claim 2, characterized in that the optical fibre (2) is bare and crosses the end (34) of the fibre end piece and protrudes at a given length.

4. Device according to Claim 1, characterized in that the linking element (5) comprises on the inside a further cylindrical chamber (12) which is connected at the front to the chamber of the centering sub-assembly (8) and opens (13) at the rear in order to receive the fibre end piece (4).

5. Device according to Claim 4, characterized in that the said further chamber (12) is traversed in a longitudinal manner by the fibre end piece (4) and by the bare fibre (2) and the chamber is provided with fastening means (17) for the fibre end piece (4).

6. Device according to Claim 4, characterized in that the said further chamber (12) comprises at the front an end wall (16) which is perpendicular to the longitudinal axis against which the fibre end piece (4) abuts and the said further chamber extends towards the front by means of a conical piece (14) and an axial passage (15) penetrating the chamber of the centering sub-assembly (8).

7. Device according to Claims 3 and 4, characterized in that the further chamber (12) comprises a rear aperture (13) which is elastically deformable and is provided with an annular clip (17) which may cooperate with the annular shoulder (20) of the fibre end piece (4) in order to immobilize the end piece after locking.

8. Device according to Claim 1, characterized in that the centering means (23) comprise a set of six balls arranged in two adjacent layers of three balls, the layers being mutually offset by 60 in order to achieve automatic centering of the fibre (2).

9. Device according to Claim 8, characterized in that the collimation means (24) comprise a converging lens which is supported on one side by three balls (23) of the end layer and on the other side by the circular aperture (22) of the chamber (21) in such a way that the lens (24) can centre itself at the opening (22).

10. Device according to Claim 9, characterized in that the lens (24) is spherical.

11. Device according to any one of the preceding claims, characterized in that the linking case (3) comprises a base (31) which may be fixed on a rail (32) which receives several cases.

_Fig.1_

Fig. 2

Fig.4

Fig.3

Fig: 5